# EUROPEAN PATENT APPLICATION

(11) **EP 4 723 262 A1**
(43) Date of publication of application: **08.04.2026**
(21) Application number: 24814956.9
(22) Date of filing: 29.03.2024
(51) Int. Cl.: H01M 10/04, H01M 4/02, H01M 4/13, H01M 10/0587, H01M 50/531

(54) **POWER STORAGE CELL**

(30) Priority: 26.05.2023 JP 2023086836
(71) Applicant: TOYOTA JIDOSHA KABUSHIKI KAISHA, Toyota-Shi, Aichi-Ken 471-8571 (JP)
(72) Inventor: KATO, Kazuhito, Toyota-shi, Aichi 471-8571 (JP); TAKASU, Junta, Toyota-shi, Aichi 471-8571 (JP); YAMANAKA, Atsushi, Toyota-shi, Aichi 471-8571 (JP); ONO, Masato, Toyota-shi, Aichi 471-8571 (JP); MORIYAMA, Satoshi, Toyota-shi, Aichi 471-8571 (JP); SUZUKI, Kosuke, Toyota-shi, Aichi 471-8571 (JP); SUGIE, Kazuki, Toyota-shi, Aichi 471-8571 (JP); KUMAZAWA, Kazuya, Toyota-shi, Aichi 471-8571 (JP)
(74) Representative: D Young & Co LLP
(86) International application number: PCT/JP2024/013153
(87) International publication number: WO 2024/247469

(57) **Abstract**

In a power storage cell, a first electrode (10) includes: a current-collector foil (11); and an electrode material (12) partially coating the current-collector foil (11). The current-collector foil (11) has a coated portion (11a) and an uncoated portion (11b). The coated portion (11a) is coated with the electrode material (12). The uncoated portion (11b) is not coated with the electrode material (12), and is exposed to one side (Z1) of an axial direction (Z) of the wound electrode assembly (1) and extends in a winding direction (X) of the wound electrode assembly (1). The uncoated portion (11b) has a plurality of bent portions (11bC) bent toward a radial direction (R) of the wound electrode assembly (1), and a folded portion (11bD) formed by folding a region of the uncoated portion (11b) between adjacent bent portions among the plurality of bent portions (11bC).

## Description

### TECHNICAL FIELD

The present disclosure relates to a power storage cell.

### BACKGROUND ART

U.S. Patent Application No. 2020/0144676 (PTL 1) discloses a cell having at least one tabless electrode. A first cap has a contact surface conforming to and connected to an electrically conductive portion of a rolled first substrate. The electrically conductive portion is an exposed region of the first substrate.

### CITATION LIST

### PATENT LITERATURE

PTL 1: U.S. Patent Application No. 2020/0144676

### SUMMARY OF INVENTION

### TECHNICAL PROBLEM

For a battery of, what is called, a tabless structural type as PTL 1 above, in order to improve the energy density, preferably, an end portion (an uncoated portion) of a current-collector foil in the axial direction of a wound electrode assembly has a reduced dimension. Here, in order to achieve the uncoated portion having a reduced dimension in the axial direction, it is contemplated to score the uncoated portion into a complex shape. However, the uncoated portion having a more complex shape may result in a decrease in degree of freedom of a conductive path in the current-collector foil. As the degree of freedom of the conductive path in the current-collector foil decreases, the amount of heat generated by the electric resistance of the current-collector foil may increase.

The present disclosure is made in view of the above problem, and an object of the present disclosure is to provide a power storage cell that includes an uncoated portion having a reduced dimension in one direction and inhibits a decrease in degree of freedom of a conductive path in a current-collector foil.

### SOLUTION TO PROBLEM

A power storage cell according to a first aspect of the present disclosure includes: include a wound electrode assembly including a first electrode and a second electrode and a case accommodating the wound electrode assembly. The first electrode includes: a current-collector foil; and an electrode material partially coating the current-collector foil. The current-collector foil has: a coated portion coated with the electrode material; and an uncoated portion not coated with the electrode material, the uncoated portion being exposed to one side in an axial direction of the wound electrode assembly and extending in a winding direction of the wound electrode assembly. The uncoated portion has a plurality of bent portions bent toward a radial direction of the wound electrode assembly, and a folded portion formed by folding a region of the uncoated portion between adjacent bent portions among the plurality of bent portions.

According to the above configuration, the uncoated portion is bent toward the radial direction. Thus, the uncoated portion can have a reduced dimension in the axial direction of the wound electrode assembly. Along with this, the region of the uncoated portion between bent portions is folded, thereby assuring electrical connection between the bent portions by the folded portion. Thus, the decrease in degree of freedom of the conductive path in the current-collector foil can be inhibited.

In the power storage cell according to the first aspect of the present disclosure, preferably, a length of each of the plurality of bent portions in the radial direction is 1 mm or greater and 23 mm or less.

Since the length of the bent portion in the radial direction is 1 mm or greater, the area of the bent portion, as viewed in the axial direction, is relatively large, facilitating connection of the bent portion with other members such as the current collector plate. Along with this, since the length of the bent portion in the radial direction is 23 mm or less, the size of the folded portion can be made relatively small. Thus, an average thickness of portions, each of which is a bent portion and a folded portion of the uncoated portion combined, can be reduced. Specifically, the uncoated portion can have a further reduced dimension in the axial direction of the wound electrode assembly.

In the power storage cell according to the first aspect of the present disclosure, preferably, a length of each of the plurality of bent portions in the winding direction is 1 mm or greater and 40 mm or less.

Since the length of the bent portion is 1 mm or greater in the winding direction, the decrease in degree of freedom of the conductive path in the current-collector foil can be further inhibited. Along with this, since the length of the bent portion in the winding direction is 40 mm or less, a curvature of the bent portion can be inhibited. Specifically, the uncoated portion can have a further reduced dimension in the axial direction.

A power storage cell according to a second aspect of the present disclosure includes: a current-collector foil; and an electrode material partially coating the current-collector foil. The current-collector foil is longer in a first direction than in a second direction intersecting the first direction. The current-collector foil has: a coated portion coated with the electrode material; and an uncoated portion not coated with the electrode material and extending in the second direction from the coated portion. The uncoated portion has a first fold and a second fold. The first fold and the second fold are formed so that a distance between the first fold and the second fold increases as the first fold and the second fold are further away from the coated portion in the second direction.

According to the above configuration, the uncoated portion can be easily bent in the radial direction by bending the first fold and the second fold of the uncoated portion while winding the current-collector foil. As the uncoated portion is bent toward the radial direction, the uncoated portion can have a reduced dimension in the second direction. Moreover, a region of the uncoated portion between the first fold and the second fold can be folded by bending the first fold and the second fold. This maintains the uncoated portion as being continuous in the first direction. Thus, the decrease in degree of freedom of the conductive path in the current-collector foil can be inhibited.

In the power storage cell according to the second aspect of the present disclosure, preferably, an end of the first fold closer to the coated portion and an end of the second fold closer to the coated portion coincide with each other.

According to the above configuration, the folded portion, formed by folding a region of the uncoated portion between the first fold and the second fold, can have a reduced area. Specifically, an average thickness of the bent portions of the uncoated portion in the second direction can be reduced.

In the power storage cell according to the second aspect of the present disclosure, preferably, the uncoated portion further has a third fold. The third fold is formed on a side opposite the second fold, as viewed from the first fold.

According to the above configuration, further bending the first fold, the second fold, and the third fold allows formation of the bent portion by, initially, bending the uncoated portion in the radial direction. The third fold is, then, bent back, thereby forming the folded portion. Specifically, the bent portion and the folded portion can be easily formed.

A power storage cell according to a third aspect of the present disclosure includes: a current-collector foil; and an electrode material partially coating the current-collector foil. The current-collector foil is longer in a first direction than in a second direction intersecting the first direction. The current-collector foil has: a coated portion coated with the electrode material; and an uncoated portion not coated with the electrode material and extending in the second direction from the coated portion. The uncoated portion includes: a base and an extended portion. The base continues with the coated portion the coated portion in the second direction. The extended portion opposite the coated portion as viewed from the base. A length of the extended portion in the first direction is 73 mm or greater, and shorter than a length of the base in the first direction.

According to the above configuration, since the length of the extended portion in the first direction is shorter than the length of the base in the first direction, the extended portion can be bent more easily than the base. Thus, the uncoated portion can have a reduced dimension in the second direction. Moreover, since the length of the extended portion in the first direction is 73 mm or greater, the extended portion can be inhibited from getting too small, thereby inhibiting the decrease in degree of freedom of the conductive path in the current-collector foil.

In the power storage cell according to the third aspect of the present disclosure, preferably, the extended portion has a length of 220 mm or less in the first direction.

According to the above configuration, since the length of the extended portion in the first direction is 220 mm or less, the extended portion can be more easily bent.

In the power storage cell according to the third aspect of the present disclosure, preferably, the extended portion has a length of 1 mm or greater and 23 mm or less in the second direction.

According to the above configuration, since the length of the extended portion in the second direction is 1 mm or greater, the extended portion can be bent even more easily than the base. Along with this, since the length of the extended portion in the second direction is 23 mm or less, the uncoated portion can have a further reduced dimension in the second direction.

### ADVANTAGEOUS EFFECTS OF INVENTION

According to the present disclosure, the decrease in degree of freedom of the conductive path in the current-collector foil can be inhibited, while achieving a reduced dimension of the uncoated portion in one direction.

### BRIEF DESCRIPTION OF DRAWINGS

Fig. 1 is a cross-sectional view of an entire power storage cell according to an embodiment of the present disclosure.
Fig. 2 is an enlarged partial sectional view of an upper surface and its surrounding area of a case of the power storage cell according to the embodiment of the present disclosure.
Fig. 3 is an enlarged partial sectional view of a lower surface and its surrounding area of the case of the power storage cell according to the embodiment of the present disclosure.
Fig. 4 is a schematic plan view of a positive plate, unwound in a planar shape, of the power storage cell according to the embodiment of the present disclosure.
Fig. 5 is a schematic perspective view of a positive plate, a negative plate, and a separator layered immediately after being wound together to fabricate a wound electrode assembly.
Fig. 6 is a schematic cross-sectional view of the positive plate, negative plate, and separator immediately after being wound together to fabricate a wound electrode assembly.
Fig. 7 is a schematic plan view of an extended portion of a positive uncoated portion immediately after being wound and immediately before multiple blades are pressed against the extended portion.
Fig. 8 is a schematic plan view of the extended portion of the positive uncoated portion immediately after being wound, while the blades are being radially pressed against the extended portion of the positive uncoated portion.
Fig. 9 is a schematic top view of a wound electrode assembly according to the embodiment of the present disclosure.
Fig. 10 is a schematic perspective view of the wound electrode assembly according to the embodiment of the present disclosure, as viewed from the above.
Fig. 11 is a schematic plan view of the negative plate, unwound in a planar shape, of the power storage cell according to the embodiment of the present disclosure.
Fig. 12 is a schematic bottom view of the wound electrode assembly according to the embodiment of the present disclosure.
Fig. 13 is a schematic perspective view of the wound electrode assembly according to the embodiment of the present disclosure, as viewed from the below.
Fig. 14 is a schematic plan view of a positive plate, unwound in a planar shape, of a power storage cell according to a variation of the embodiment of the present disclosure.
Fig. 15 is a schematic cross-sectional view of a positive plate, a negative plate, and a separator immediately after being wound together to fabricate a wound electrode assembly according to the variation of the embodiment of the present disclosure.
Fig. 16 is a schematic perspective view of the wound electrode assembly according to the variation of the embodiment of the present disclosure.

### DESCRIPTION OF EMBODIMENTS

In the following, an embodiment of the present disclosure will be described, with reference to the accompanying drawings. Note that like reference signs are used to refer to like or corresponding parts in the drawings, and the description thereof will not be repeated.

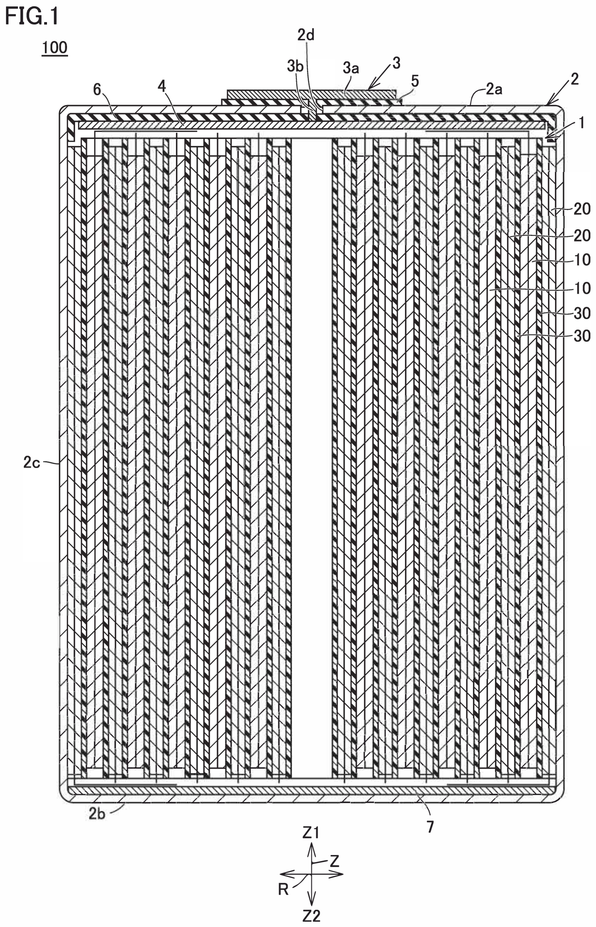

Fig. 1 is a cross-sectional view of an entire power storage cell according to an embodiment of the present disclosure. A power storage cell 100 is, for example, a lithium-ion battery that is mounted on a vehicle. Note that the application and type of power storage cell 100 are not limited to the above example.

Power storage cell 100 according to the embodiment of the present disclosure includes a wound electrode assembly 1, a case 2, a positive terminal 3, a positive current collector plate 4, an external gasket 5, an internal gasket 6, and a negative current collector plate 7.

Wound electrode assembly 1 is accommodated in case 2. Case 2 has a cylindrical shape. In other words, power storage cell 100 is a cylindrical battery.

Wound electrode assembly 1 includes a positive plate 10, a negative plate 20, and a separator 30. Wound electrode assembly 1 includes separator 30 between positive plate 10 and negative plate 20 in a radial direction R of wound electrode assembly 1. Separator 30 separates positive plate 10 and negative plate 20. Meanwhile, separator 30 is configured to allow ions (e.g., lithium-ions) to traverse between positive plate 10 (a positive active material) and negative plate 20 (a negative active material).

Wound electrode assembly 1 is configured of a group of electrode plates, in which positive plate 10 and negative plate 20 are wound together via separator 30. Note that the positive plate 10 and negative plate 20 according to the present embodiment are one example of a "first electrode" and a "second electrode, respectively, according to the present disclosure. Note that the "first electrode" and the "second electrode" according to the present disclosure may be negative plate 20 and positive plate 10, respectively. A configuration of wound electrode assembly 1 will be described below in detail.

Case 2 has an upper surface 2a, a lower surface 2b, and a circumferential surface 2c. Upper surface 2a is located on one side of the axial direction of the cylindrical shape of case 2. Upper surface 2a is located on one side of an axial direction Z of wound electrode assembly 1 as viewed from wound electrode assembly 1. Lower surface 2b is located on the other side of the axial direction of the cylindrical shape of case 2. Lower surface 2b is located on the other side of axial direction Z of wound electrode assembly 1, as viewed from wound electrode assembly 1. Circumferential surface 2c has a tubular outline. Circumferential surface 2c connects upper surface 2a and lower surface 2b. Case 2 is formed of copper or aluminum, for example. Note that the case 2 accommodates an electrolyte solution (not shown) too.

Case 2 has a height dimension (a dimension in axial direction Z) of, for example, 50 mm or greater, 60 mm or greater, 70 mm or greater, or 80 mm or greater. The greater the height dimension (the dimension in axial direction Z) of case 2, the greater the battery storage capacity of power storage cell 100. Moreover, case 2 has a height dimension (the dimension in axial direction Z) of, for example, 150 mm or less, 100 mm or less, or 80 mm or less. The less the dimension (the height dimension) of case 2 in axial direction Z, the less the height of a module accommodating power storage cells 100 can be made.

Case 2 has a diameter dimension (a dimension in radial direction R) of, for example, 15 mm or greater, 20 mm or greater, 25 mm or greater, 30 mm or greater, 40 mm or greater, 45 mm or greater, or 46 mm or greater. The greater the diameter dimension (a maximum dimension in radial direction R) of case 2, the greater the battery storage capacity of power storage cell 100. Case 2 has the diameter dimension (the dimension in radial direction R) of, for example, 100 mm or less, 75 mm or less, 50 mm or less, or 46 mm or less. The less the diameter dimension (the dimension in radial direction R) of case 2, the more densely the power storage cells 100 can be disposed in the module.

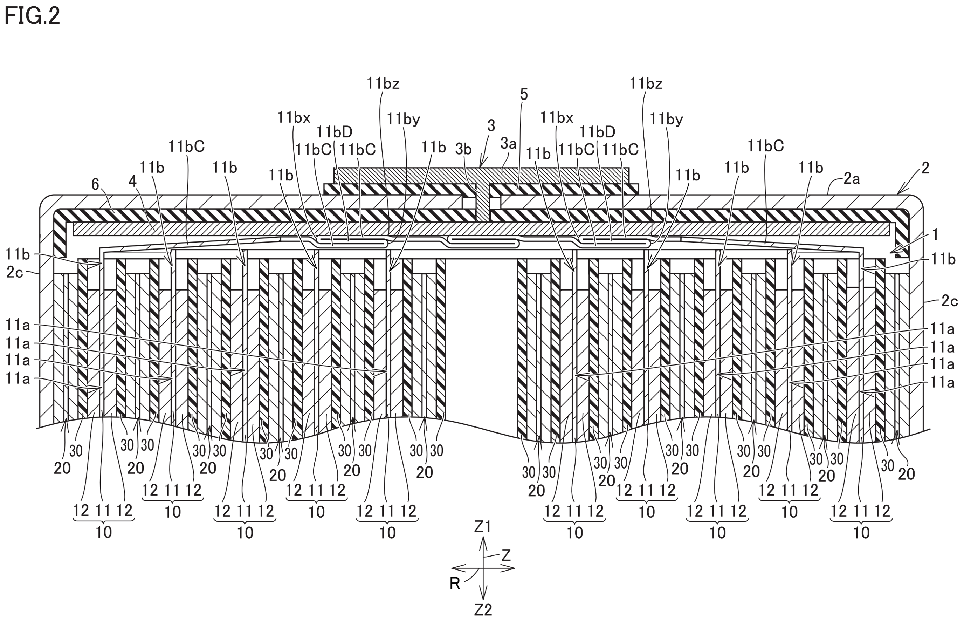

Fig. 2 is an enlarged partial sectional view of the upper surface and its surrounding area of the case of the power storage cell according to the embodiment of the present disclosure.

As shown in Figs. 1 and 2, positive terminal 3 is located on one side Z1 of axial direction Z, as viewed from wound electrode assembly 1. Positive terminal 3 includes a disk portion 3a and a riveting portion 3b. Riveting portion 3b is connected to disk portion 3a. Riveting portion 3b extends from the center of disk portion 3a to the other side Z2 of axial direction Z. Note that the positive terminal 3 is formed of aluminum. Disk portion 3a is disposed on upper surface 2a of case 2. Upper surface 2a of case 2 has a through-hole 2d. Riveting portion 3b extends from disk portion 3a, external to case 2, into case 2 through through-hole 2d.

Positive current collector plate 4 is accommodated in case 2. Positive current collector plate 4 is located on one side Z1 in axial direction Z, as viewed from wound electrode assembly 1. Positive current collector plate 4 is welded to a positive uncoated portion 11b of positive plate 10 described below. This positively charges positive current collector plate 4. Positive current collector plate 4 is welded to an end 3c of riveting portion 3b on the other side Z2 of axial direction Z. This positively charges positive terminal 3.

External gasket 5 is disposed between disk portion 3a of positive terminal 3 and upper surface 2a of case 2. This electrically insulates positive terminal 3 and case 2 from each other.

Internal gasket 6 is disposed between case 2 and positive current collector plate 4 in case 2. This electrically insulates case 2 and positive current collector plate 4 from each other. Note that the riveting portion 3b passes through internal gasket 6 and in contact with positive current collector plate 4.

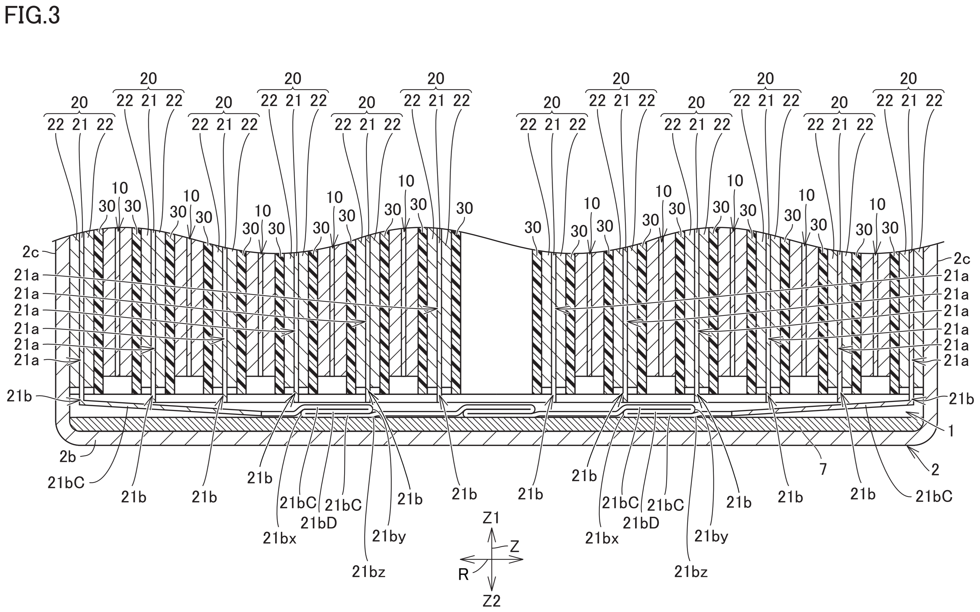

Fig. 3 is an enlarged partial sectional view of the lower surface and its surrounding area of the case of the power storage cell according to the embodiment of the present disclosure.

As shown in Figs. 1 and 3, negative current collector plate 7 is accommodated in case 2. Negative current collector plate 7 is located on the other side Z2 of axial direction Z, as viewed from wound electrode assembly 1. Negative current collector plate 7 is welded to a negative uncoated portion 21b of negative plate 20 described below. This negatively charges negative current collector plate 7. Negative current collector plate 7 is in contact with case 2. Specifically, negative current collector plate 7 is in contact with lower surface 2b and circumferential surface 2c. This negatively charges case 2. Specifically, upper surface 2a is negatively charged.

A detailed configuration of wound electrode assembly 1 is now described. Initially, a configuration of positive plate 10 is described. As shown in Figs. 1 and 2, positive plate 10 includes a positive current-collector foil 11 and positive electrode mixture layers 12. Since positive plate 10 according to the present embodiment is one example of the "first electrode" according to the present disclosure as noted above, positive current-collector foil 11 and positive electrode mixture layer 12 according to the present embodiment correspond to a "current-collector foil" and an "electrode material," respectively, according to the present disclosure.

Positive current-collector foil 11 is partially coated with positive electrode mixture layer 12. The opposing sides of wound electrode assembly 1 in radial direction R are coated with positive electrode mixture layer 12.

Positive current-collector foil 11 is formed of aluminum, for example. Positive electrode mixture layer 12 is formed by coating and drying a cathode slurry on the surface of positive current-collector foil 11. The cathode slurry is prepared by mixing a material, composing positive electrode mixture layer 12, and a solvent. The material composing positive electrode mixture layer 12 includes a positive active material and a binder, for example. Positive electrode mixture layer 12 is tightly adhered to separator 30. Positive electrode mixture layer 12 has a thickness of, for example, 0.1 µm or greater and 1000 µm or less.

Positive current-collector foil 11 has a positive coated portion 11a and a positive uncoated portion 11b. Positive coated portion 11a is coated with positive electrode mixture layer 12.

Positive uncoated portion 11b is not coated with positive electrode mixture layer 12. Positive uncoated portion 11b extends from positive coated portion 11a to one side Z1 of axial direction Z of wound electrode assembly. Positive uncoated portion 11b is exposed to one side Z1 of axial direction Z of wound electrode assembly 1.

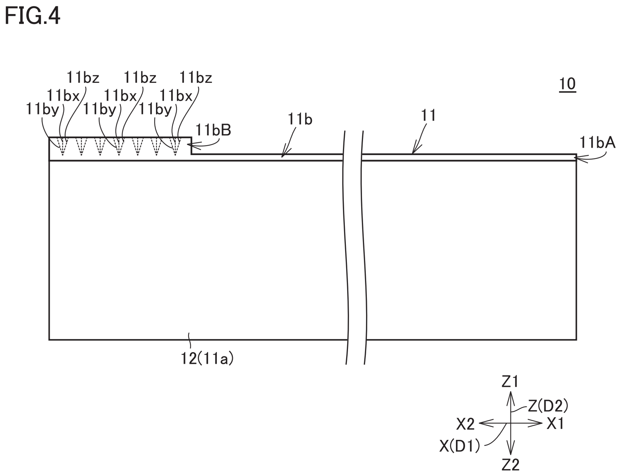

Fig. 4 is a schematic plan view of the positive plate, unwound in a planar shape, of the power storage cell according to the embodiment of the present disclosure. In Fig. 4, a winding direction X corresponds to the planar direction of the drawing.

As shown in Fig. 4, positive current-collector foil 11, when stretched in winding direction X, has a generally-rectangular outline. In other words, positive current-collector foil 11, in such a state, has an outline so as to be longer in a first direction D1 than in a second direction D2 intersecting first direction D1. More specifically, second direction D2 is a direction orthogonal to first direction D1. First direction D1 corresponds to winding direction X in which the positive plate is wound. Second direction D2 is substantially the same direction as the axial direction Z.

Positive uncoated portion 11b extends from positive coated portion 11a in second direction D2 (axial direction Z). Positive uncoated portion 11b extends in first direction D1 (winding direction X).

A first fold 11bx, a second fold 11by, and a third fold 11bz are formed in positive uncoated portion 11b.

First fold 11bx and second fold 11by are formed so that the distance between the two increases as they are further away from positive coated portion 11a in second direction D2 (axial direction Z). A positive coated portion 11a-side end of first fold 11bx and a positive coated portion 11a-side end of second fold 11by coincide with each other. An end of first fold 11bx opposite the positive coated portion 11a is located at an edge of positive uncoated portion 11b. An end of second fold 11by opposite the positive coated portion 11a is located at the edge of positive uncoated portion 11b.

As viewed from first fold 11bx, third fold 11bz is formed on a side opposite the second fold 11by. First fold 11bx and third fold 11bz are formed so that the distance between the two increases as they are further away from positive coated portion 11a in second direction D2 (axial direction Z). The positive coated portion 11a-side end of first fold 11bx and a positive coated portion 11a-side end of third fold 11bz coincide with each other. An end of third fold 11bz opposite the positive coated portion 11a is located at the edge of positive uncoated portion 11b. Note that the positive uncoated portion 11b may not include third fold 11bz.

Positive uncoated portion 11b has multiple first folds 11bx, multiple second folds 11by respectively corresponding to the multiple first folds 11bx, and multiple third folds 11bz respectively corresponding to the multiple first folds 11bx. One first fold 11bx, one second fold 11by, and one third fold 11bz, adjacent to one another, comprise one fold group. Multiple fold groups are separate from one another in first direction D1 (winding direction X).

Positive uncoated portion 11b has a base 11bA and an extended portion 11bB. Base 11bA continues with positive coated portion 11a in second direction D2 (axial direction Z). Base 11bA extends across positive current-collector foil 11 in first direction D1 (winding direction X). As viewed from base 11bA, extended portion 11bB extends opposite the positive coated portion 11a. The length of extended portion 11bB in first direction D1 is shorter than the length of base 11bA in first direction D1 (winding direction X). Due to this, extended portion 11bB can be bent more easily than base 11bA (described in detail below). Multiple first folds 11bx, multiple second folds 11by, and multiple third folds 11bz are formed in extended portion 11bB.

Extended portion 11bB extends from an end of base 11bA on a terminating end side X2 of first direction D1 (winding direction X). However, where extended portion 11bB extends from is not limited thereto. Moreover, positive uncoated portion 11b may include multiple extended portions 11bB as extended portion 11bB that includes the above-described folds.

Preferably, the length of extended portion 11bB in first direction D1 (winding direction X) is longer than half a lap of wound electrode assembly 1 in winding direction X. More preferably, the length of extended portion 11bB in first direction D1 (winding direction X) is longer than a lap of wound electrode assembly 1 in winding direction X. Stated differently, preferably, with the positive plate being wound, at least one portion and another portion of extended portion 11bB overlap as viewed from the center of the winding. The longer the length of extended portion 11bB in first direction D1 (winding direction X), the greater the degree of freedom of a current path in extended portion 11bB. Note that it is also preferable that the length of extended portion 11bB in first direction D1 (winding direction X) is shorter than a lap of wound electrode assembly 1 in winding direction X. The shorter the length of extended portion 11bB in first direction D1 (winding direction X), the easier it is to bend extended portion 11bB as compared to base 11bA. Note that the starting end side X1 of winding direction X, as used herein, refers to the central end side of wound electrode assembly 1 from which the winding of wound electrode assembly 1 begins, and terminating side X2 of winding direction X refers to an outer peripheral end side of wound electrode assembly 1 at which the winding of wound electrode assembly 1 ends.

Moreover, preferably, the length of extended portion 11bB in first direction D1 (winding direction X) is 73 mm or greater. If the length of extended portion 11bB in first direction D1 (winding direction X) is 73 mm or greater, the decrease in degree of freedom of the current path in positive current-collector foil 11 can be further inhibited. Note that the length of extended portion 11bB in first direction D1 (winding direction X) may be 1 mm or greater, 5 mm or greater, 10 mm or greater, 25 mm or greater, 50 mm or greater, 100 mm or greater, 145 mm or greater, 150 mm or greater, 200 mm or greater, 500 mm or greater, or 1000 mm or greater. Preferably, the length of extended portion 11bB in first direction D1 (winding direction X) is 220 mm or less. If extended portion 11bB is 220 mm or less, it is easier to bend extended portion 11bB as compared to base 11bA. Specifically, extended portion 11bB, when bent in radial direction R after the positive plate is wound, can have smaller overlapping portions. Thus, formation of the bent portions and the folded portions described below is facilitated. Note that the length of extended portion 11bB in first direction D1 (winding direction X) may be 2000 mm or less, 1500 mm or less, 1000 mm or less, 750 mm or less, 500 mm or less, 250 mm or less, 200 mm or less, 150 mm or less, 145 mm or less, or 140 mm or less.

Preferably, the length of extended portion 11bB in second direction D2 is 1 mm or greater and 23 mm or less. Since the length of extended portion 11bB in second direction D2 is 1 mm or greater, extended portion 11bB can be bent more easily than base 11bA. Moreover, since the length of extended portion 11bB in second direction D2 is 23 mm or less, positive uncoated portion 11b can have a reduced dimension in second direction D2. The length of extended portion 11bB in second direction D2 may be 0.1 mm or greater, 0.5 mm or greater, 5 mm or greater, or 10 mm or greater. The length of extended portion 11bB in second direction D2 may be 100 mm or less, 50 mm or less, 20 mm or less, or 10 mm or less.

Then, as shown in Fig. 2, positive uncoated portion 11b has multiple bent portions 11bC and one or more folded portions 11bD. Here, before describing a configuration of bent portions 11bC and folded portions 11bD, one example of a method of formation of bent portions 11bC and folded portions 11bD (a method of fabrication of wound electrode assembly 1 and a method of fabrication of power storage cell 100, according to the present embodiment) will be described. Note that the method of formation of bent portions 11bC and folded portions 11bD is not limited to the method described below.

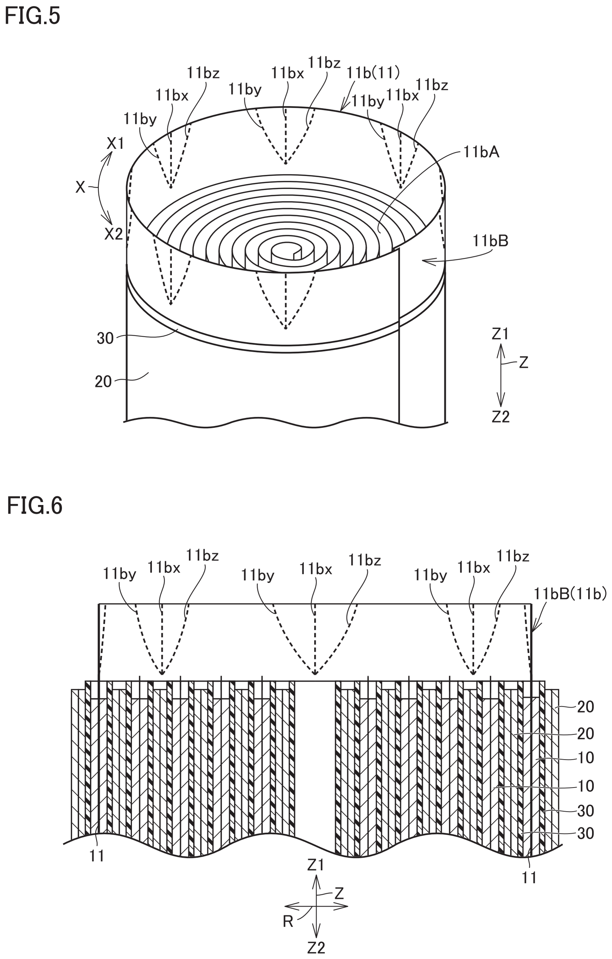

Fig. 5 is a schematic perspective view of the positive plate, the negative plate, and the separator layered immediately after being wound together to fabricate a wound electrode assembly. Fig. 6 is a schematic cross-sectional view of the positive plate, the negative plate, and the separator immediately after being wound together to fabricate a wound electrode assembly. As shown in Figs. 5 and 6, immediately after positive plate 10, negative plate 20, and separator 30 are wound together, the entirety of positive current-collector foil 11 is extending in axial direction Z. In other words, immediately after the winding, positive uncoated portion 11b and extended portion 11bB extend in axial direction Z. Moreover, immediately after the winding, first fold 11bx, second fold 11by, and third fold 11bz may be or may not be already formed.

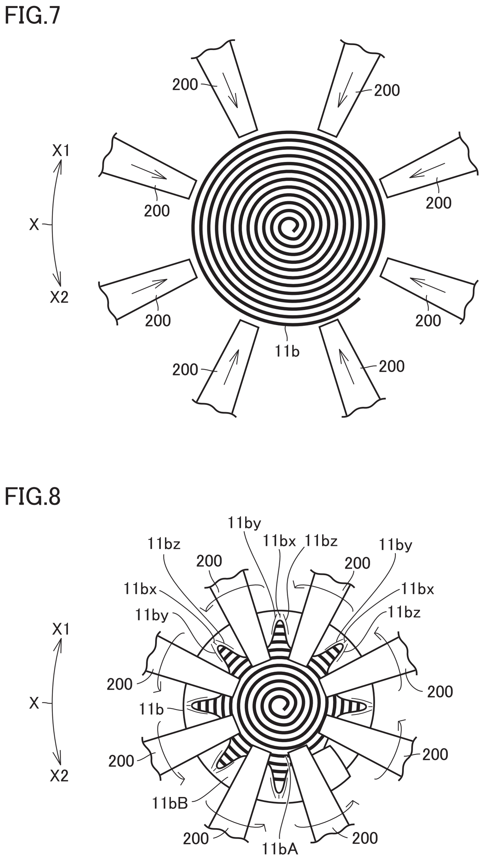

Fig. 7 is a schematic plan view of the extended portion of the positive uncoated portion immediately after the winding and immediately before multiple blades are radially pressed against the extended portion. Fig. 8 is a schematic plan view of the extended portion of the positive uncoated portion immediately after the winding, while the blades are being radially pressed against the extended portion of the positive uncoated portion. As shown in Figs. 7 an 8, positive plate 10, negative plate 20, and separator 30 are wound together, and blades 200 are, then, pressed against extended portion 11bB of positive uncoated portion 11b.

Blades 200 are pressed against extended portion 11bB toward the center of the winding from the radially outer side of the wound electrode assembly immediately after the winding. Blades 200 are aligned apart from one another in the circumference direction of the wound electrode assembly immediately after the winding. Blades 200 are pressed against extended portion 11bB between adjacent fold groups. Note that, first fold 11bx, second fold 11by, and third fold 11bz may not be formed until at this point of time. As blades 200 are pressed against extended portion 11bB of positive uncoated portion 11b as described above, extended portion 11bB is bent radially inward of wound electrode assembly 1. In order to bend extended portion 11bB in a uniform manner, preferably, blades 200 are equidistantly aligned along winding direction X. Moreover, since the entirety of extended portion 11bB is bent in radial direction R, preferably, four or more, and, more preferably, eight or more blades 200 are pressed against extended portion 11bB.

Subsequently, blades 200 collapse toward one side of the circumference direction of wound electrode assembly 1. More specifically, a blade 200, located on the side opposite an adjacent second fold 11by, as viewed from first fold 11bx, collapses toward between first fold 11bx and an adjacent third fold 11bz. This folds a region of extended portion 11bB of positive uncoated portion 11b between first fold 11bx and second fold 11by. A region of extended portion 11bB of positive uncoated portion 11b between first fold 11bx and third fold 11bz is disposed extending along a direction intersecting axial direction Z.

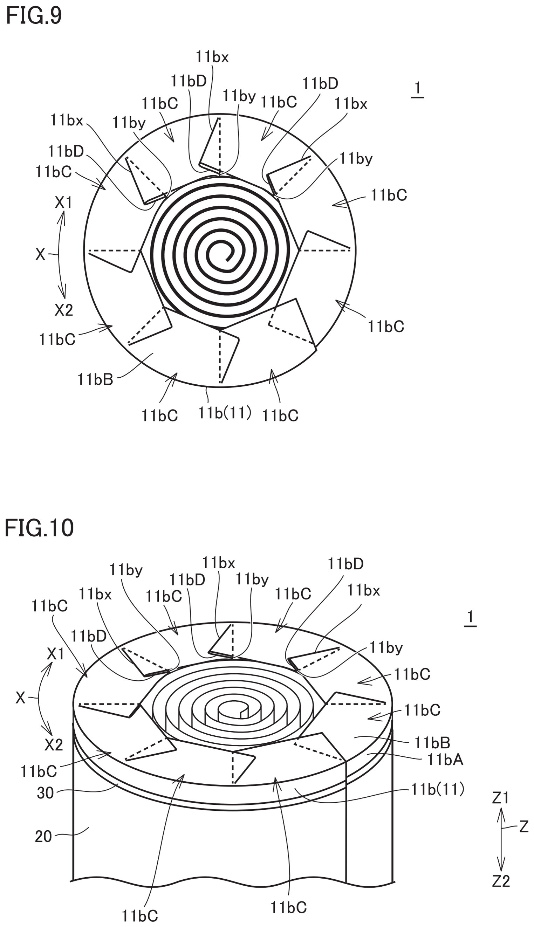

Fig. 9 is a schematic top view of the wound electrode assembly according to the embodiment of the present disclosure. Fig. 10 is a schematic perspective view of the wound electrode assembly according to the embodiment of the present disclosure, as viewed from the above. As shown in Figs. 7 to 11, as blades 200 are radially pressed against extended portion 11bB as described above, extended portion 11bB is bent in the radial direction and bent portions 11bC are, thereby, formed. Then, as blades 200 collapse as described above, regions of extended portion 11bB between bent portions 11bC are folded and folded portions 11bD are, thereby, formed.

Here, as noted above, positive coated portion 11a-side end of first fold 11bx and positive coated portion 11a-side end of second fold 11by coincide with each other. Due to this, folded portion 11bD, formed by folding a region of extended portion 11bB between first fold 11bx and second fold 11by, can have a reduced area. Specifically, an average thickness of the bent portions of positive uncoated portion 11b in second direction D2 can be reduced. Moreover, third fold 11bz is formed on a side opposite the second fold 11by as viewed from first fold 11bx. Due to this, bending first fold 11bx, second fold 11by, and third fold 11bz allows formation of bent portion 11bC by, initially, bending positive uncoated portion 11b in the radial direction. Third fold 11bz is, then, bent back, thereby forming folded portion 11bD. Specifically, bent portion 11bC and folded portion 11bD can be easily formed.

Note that it is also contemplated to previously form cuts in extended portion 11bB in order to form bent portion 11bC. However, cuts are formed in extended portion 11bB by laser irradiation, for example. As extended portion 11bB is irradiated with laser, the laser heat is transferred to positive electrode mixture layer 12. The heat may damage positive current-collector foil 11 or positive plate 10. Moreover, foreign matters such as fumes may be produced during the laser irradiation. Accordingly, including folded portion 11bD can inhibit generation of damages to positive current-collector foil 11 or positive plate 10 and foreign matters such as fumes, as compared to forming cuts in extended portion 11bB.

Moreover, if the diameter dimension of case 2 is 46 mm and extended portion 11bB extends from the end of base 11bA on terminating side X2 of first direction D1 (winding direction X) (see Fig. 4), it is also preferable that the length of extended portion 11bB in first direction D1 (winding direction X) is 145 mm or less. This can achieve a reduced area of the overlapping portion of the opposing ends of extended portion 11bB in winding direction X when extended portion 11bB is bent (see Figs. 9 and 10). Furthermore, if the diameter dimension of case 2 is 46 mm and extended portion 11bB extends from the end of base 11bA on terminating side X2 of first direction D1 (winding direction X) (see Fig. 4), it is particularly preferable that the length of extended portion 11bB in second direction D2 is 23 mm or less. This can inhibit portions of extended portion 11bB, which are located symmetric about the center of the winding, from overlapping when extended portion 11bB is bent (see Figs. 9 and 10).

A configuration of bent portion 11bC and folded portion 11bD is now described. As shown in Figs. 2, 9, and 10, positive uncoated portion 11b has the multiple bent portions 11bC and the one or more folded portions 11bD.

Bent portions 11bC are formed by bending positive uncoated portion 11b toward radial direction R (see Fig. 2) of wound electrode assembly 1. Bent portions 11bC are aligned in winding direction X. Bent portions 11bC adjacent to each other in winding direction X overlap in axial direction Z.

The radial length of each bent portion 11bC is, for example, 1 mm or greater and 23 mm or less. Since the radial length of bent portion 11bC is 1 mm or greater, the area of bent portion 11bC, as viewed in axial direction Z, is relatively large, facilitating welding of bent portion 11bC and positive current collector plate 4, for example. Along with this, since the radial length of bent portion 11bC is 23 mm or less, the size of folded portion 11bD can be made relatively small. Thus, an average thickness of portions, each of which is bent portion 11bC and folded portion 11bD of positive uncoated portion 11b combined, can be reduced. Specifically, positive uncoated portion 11b can have a further reduced dimension in axial direction Z of wound electrode assembly 1. Note that the radial length of bent portion 11bC may be 0.1 mm or greater, 0.5 mm or greater, 5 mm or greater, or 10 mm or greater. The radial length of bent portion 11bC may be 100 mm or less, 50 mm or less, 20 mm or less, 15 mm or less, or 10 mm or less.

The length of each bent portion 11bC in the winding direction is, for example, 1 mm or greater and 40 mm or less. Since the length of bent portion 11bC in the winding direction is 1 mm or greater, the decrease in degree of freedom of the conductive path in positive current-collector foil 11 can be further inhibited. Along with this, since the length of bent portion 11bC in the winding direction is 40 mm or less, a curvature of bent portion 11bC can be inhibited. Specifically, positive uncoated portion 11b can have a further reduced dimension in axial direction Z. Note that the length of bent portion 11bC in the winding direction may be 0.1 mm or greater, 0.5 mm or greater, 5 mm or greater, 10mm, or 20 mm or greater. The length of bent portion 11bC in the winding direction may be 20 mm or less, 15 mm or less, 10 mm or less, or 5 mm or less.

Note that if the diameter dimension of case 2 is 46 mm and four blades 200 (see Figs. 7 and 8) are equidistantly aligned to be pressed against extended portion 11bB to bend extended portion 11bB, the length, in the winding direction, of each bent portion 11bC to be formed is 40 mm or less. Thus, preferably, the length of bent portion 11bC in the winding direction is 40 mm or less from the standpoint of easy bending of the entire extended portion 11bB (facilitating the formation of bent portion 11bC).

Folded portion 11bD is formed by folding a region of positive uncoated portion 11b between adjacent bent portions 11bC. Folded portion 11bD is a portion of positive uncoated portion 11b between first fold 11bx and second fold 11by. Folded portion 11bD is folded so that the first fold 11bx is a mountain fold as viewed from one side Z1 of axial direction Z. Folded portion 11bD is folded so that the second fold 11by is a mountain fold as viewed from the other side Z2 of axial direction Z.

Moreover, third fold 11bz is on bent portion 11bC (see Fig. 2). Third fold 11bz is substantially aligned with second fold 11by in axial direction Z.

Next, a configuration of negative plate 20 is described. As shown in Fig. 3, negative plate 20 includes a negative current-collector foil 21 and negative electrode mixture layers 22. While negative plate 20 is one example of the "second electrode" according to the present disclosure, negative plate 20 may be the "first electrode" according to the present disclosure. When negative plate 20 is the "first electrode" according to the present disclosure, negative current-collector foil 21 and negative electrode mixture layer 22 may correspond to the "current-collector foil" and the "electrode material," respectively, according to the present disclosure.

Negative current-collector foil 21 is partially coated with negative electrode mixture layer 22. The opposing sides of wound electrode assembly 1 in radial direction R are coated with negative electrode mixture layer 22.

Negative current-collector foil 21 is formed of copper, for example. Negative electrode mixture layer 22 is formed by coating and drying an anode slurry on the surface of negative current-collector foil 21. The anode slurry is prepared by mixing a material, composing negative electrode mixture layer 22, and a solvent. The material composing negative electrode mixture layer 22 includes a negative active material and a binder, for example. Negative electrode mixture layer 22 is tightly adhered to separator 30. Negative electrode mixture layer 22 has a thickness of, for example, 0.1 µm or greater and 1000 µm or less.

Negative current-collector foil 21 has a negative coated portion 21a and a negative uncoated portion 21b. Negative electrode mixture layer 22 is coated with negative coated portion 21a.

Negative uncoated portion 21b is not coated with negative electrode mixture layer 22. Negative uncoated portion 21b extends from negative coated portion 21a to the other side Z2 of axial direction Z of wound electrode assembly 1. Negative uncoated portion 21b is exposed to the other side Z2 of axial direction Z of wound electrode assembly 1.

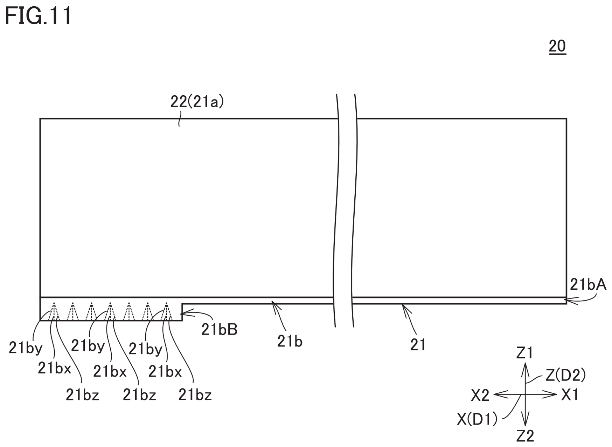

Fig. 11 is a schematic plan view of the negative plate, unwound in a planar shape, of the power storage cell according to the embodiment of the present disclosure. In Fig. 11, winding direction X corresponds to the planar direction of the drawing.

As shown in Fig. 11, negative current-collector foil 21, when stretched in winding direction X, has a generally-rectangular outline. In other words, negative current-collector foil 21, in such a state, has an outline so as to be longer in a first direction D1 than in a second direction D2 intersecting first direction D1. More specifically, second direction D2 is a direction orthogonal to first direction D1. First direction D1 corresponds to winding direction X in which the negative plate is wound. Second direction D2 is substantially the same direction as axial direction Z.

Negative uncoated portion 21b extends from negative coated portion 21a in second direction D2 (axial direction Z). Negative uncoated portion 21b extends in first direction D1 (winding direction X).

A first fold 21bx, a second fold 21by, and a third fold 21bz are formed in negative uncoated portion 21b.

First fold 21bx and second fold 21by are formed so that the distance between the two increases as they are further away from negative coated portion 21a in second direction D2 (axial direction Z). A negative coated portion 21a-side end of first fold 21bx and a negative coated portion 21a-side end of second fold 21by coincide with each other. An end of first fold 21bx opposite the negative coated portion 21a is located at an edge of negative uncoated portion 21b. An end of second fold 21by opposite the negative coated portion 21a is located at the edge of negative uncoated portion 21b.

As viewed from first fold 21bx, third fold 21bz is formed on a side opposite second fold 21by. First fold 21bx and third fold 21bz are formed so that the distance between the two increases as they are further away from negative coated portion 21a in second direction D2 (axial direction Z). The negative coated portion 21a-side end of first fold 21bx and a negative coated portion 21a-side end of third fold 21bz coincide with each other. An end of third fold 21bz opposite the negative coated portion 21a is located at the edge of negative uncoated portion 21b. Note that the negative uncoated portion 21b may not include third fold 21bz.

Negative uncoated portion 21b has multiple first folds 21bx, multiple second folds 21by respectively corresponding to the multiple first folds 21bx, and multiple third folds 21bz respectively corresponding to the multiple first folds 21bx. One first fold 21bx, one second fold 21by, and one third fold 21bz, adjacent to one another, comprise one fold group. Multiple fold groups are apart from one another in first direction D1 (winding direction X).

Negative uncoated portion 21b has a base 21bA and an extended portion 21bB. Base 21bA continues with negative coated portion 21a in second direction D2 (axial direction Z). Base 21bA extends across negative current-collector foil 21 in first direction D1 (winding direction X). As viewed from base 21bA, extended portion 21bB extends opposite the negative coated portion 21a. The length of extended portion 21bB in first direction D1 is shorter than the length of base 21bA in first direction D1 (winding direction X). Due to this, extended portion 21bB can be bent more easily than base 21bA (described in detail below). Multiple first folds 21bx, multiple second folds 21by, and multiple third folds 21bz are formed in extended portion 21bB.

Extended portion 21bB extends from an end of base 21bA on terminating side X2 of first direction D1 (winding direction X). However, where extended portion 21bB extends from is not limited thereto. Moreover, negative uncoated portion 21b may include multiple extended portions 21bB as extended portion 21bB that includes the above-described folds.

Preferably, the length of extended portion 21bB in first direction D1 (winding direction X) is longer than half a lap of wound electrode assembly 1 in winding direction X. More preferably, the length of extended portion 21bB in first direction D1 (winding direction X) is longer than a lap of wound electrode assembly 1 in winding direction X. Stated differently, preferably, with the negative plate being wound, at least one portion and another portion of extended portion 21bB overlap as viewed from the center of the winding. The longer the length of extended portion 21bB in first direction D1 (winding direction X), the greater the degree of freedom of a current path in extended portion 21bB. Note that it is also preferable that the length of extended portion 21bB in first direction D1 (winding direction X) is shorter than a lap of wound electrode assembly 1 in winding direction X. The shorter the length of extended portion 21bB in first direction D1 (winding direction X), the easier it is to bend extended portion 21bB as compared to base 21bA.

Moreover, preferably, the length of extended portion 21bB in first direction D1 (winding direction X) is 73 mm or greater. If the length of extended portion 21bB in first direction D1 (winding direction X) is 73 mm or greater, the decrease in degree of freedom of the current path in negative current-collector foil 21 can be further inhibited. Note that the length of extended portion 21bB in first direction D1 (winding direction X) may be 1 mm or greater, 5 mm or greater, 10 mm or greater, 25 mm or greater, 50 mm or greater, 100 mm or greater, 145 mm or greater, 150 mm or greater, 200 mm or greater, 500 mm or greater, or 1000 mm or greater. Preferably, the length of extended portion 21bB in first direction D1 (winding direction X) is 220 mm or less. If extended portion 21bB is 220 mm or less, it is easier to bend extended portion 21bB as compared to base 21bA. Specifically, extended portion 21bB, when bent in radial direction R after the negative plate is wound, can have smaller overlapping portions. Thus, formation of the bent portions and the folded portions described below is facilitated. Note that the length of extended portion 21bB in first direction D1 (winding direction X) may be 2000 mm or less, 1500 mm or less, 1000 mm or less, 750 mm or less, 500 mm or less, 250 mm or less, 200 mm or less, 150 mm or less, 145 mm or less, or 140 mm or less.

Preferably, the length of extended portion 21bB in second direction D2 is 1 mm or greater and 23 mm or less. Since the length of extended portion 21bB in second direction D2 is 1 mm or greater, extended portion 21bB can be bent more easily than base 21bA. Moreover, since the length of extended portion 21bB in second direction D2 is 23 mm or less, negative uncoated portion 21b can have a reduced dimension in second direction D2. The length of extended portion 21bB in second direction D2 may be 0.1 mm or greater, 0.5 mm or greater, 5 mm or greater, or 10 mm or greater. The length of extended portion 21bB in second direction D2 may be 100 mm or less, 50 mm or less, 20 mm or less, or 10 mm or less.

Then, as shown in Fig. 3, negative uncoated portion 21b has multiple bent portions 21bC and one or more folded portions 21bD. Bent portion 21bC and folded portion 21bD of negative uncoated portion 21b can be formed by the same method as the bent portion 11bC and folded portion 11bD of positive uncoated portion 11b are formed. In other words, immediately after the winding, extended portion 21bB (see Fig. 11) is bent in the radial direction and bent portions 21bC are, thereby, formed. Then, regions of extended portion 21bB between bent portions 21bC are folded and folded portions 21bD are, thereby, formed.

Note that it is also contemplated to previously form cuts in extended portion 21bB in order to form bent portion 21bC. However, cuts are formed in extended portion 21bB by laser irradiation, for example. As extended portion 21bB is irradiated with laser, the laser heat is transferred to negative electrode mixture layer 22. The heat may damage negative current-collector foil 21 or negative plate 20. Moreover, foreign matters such as fumes may be produced during the laser irradiation. Accordingly, including folded portion 21bD can inhibit generation of damages to negative current-collector foil 21 or negative plate 20 and foreign matters such as fumes, as compared to forming cuts in extended portion 21bB.

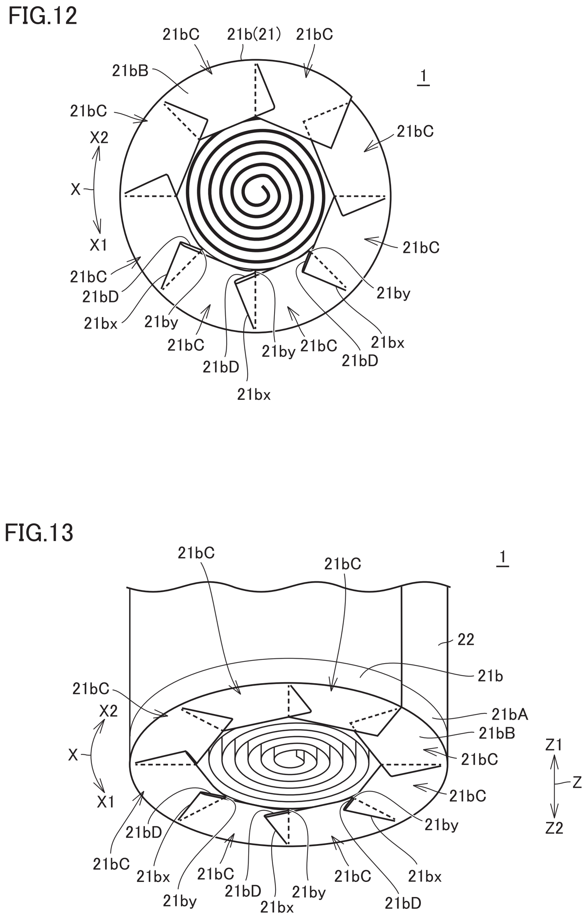

Fig. 12 is a schematic bottom view of the wound electrode assembly according to the embodiment of the present disclosure. Fig. 13 is a schematic perspective view of the wound electrode assembly according to the embodiment of the present disclosure, as viewed from the below.

If the diameter dimension of case 2 is 46 mm and extended portion 21bB extends from the end of base 21bA on terminating side X2 of first direction D1 (winding direction X) (see Fig. 11), it is also preferable that the length of extended portion 21bB in first direction D1 (winding direction X) is 145 mm or less. This can achieve a reduced area of the overlapping portion of the opposing ends of extended portion 21bB in winding direction X when extended portion 21bB is bent as shown in Figs. 12 and 13. Furthermore, if the diameter dimension of case 2 is 46 mm and extended portion 21bB extends from the end of base 21bA on terminating side X2 of first direction D1 (winding direction X) (see Fig. 11), it is particularly preferable that the length of extended portion 21bB in second direction D2 is 23 mm or less. This can inhibit portions of extended portion 21bB, which are located symmetric about the center of the winding, from overlapping when extended portion 21bB is bent (see Figs. 12 and 13).

As shown in Figs. 12 and 13, bent portions 21bC are formed by bending negative uncoated portion 21b toward radial direction R (see Fig. 3) of wound electrode assembly 1. Bent portions 21bC are aligned in winding direction X. Bent portions 21bC adjacent to each other in winding direction X overlap in axial direction Z.

The radial length of each bent portion 21bC is, for example, 1 mm or greater and 23 mm or less. Since the radial length of bent portion 21bC is 1 mm or greater, the area of bent portion 21bC, as viewed from axial direction Z, is relatively large, facilitating welding of bent portion 21bC and negative current collector plate 7, for example. Along with this, since the radial length of bent portion 21bC is 23 mm or less, the size of folded portion 21bD can be made relatively small. Thus, an average thickness of portions, each of which is bent portion 21bC and folded portion 21bD of negative uncoated portion 21b combined, can be reduced. Specifically, negative uncoated portion 21b can have a reduced dimension in axial direction Z of wound electrode assembly 1. Note that the radial length of bent portion 21bC may be 0.1 mm or greater, 0.5 mm or greater, 5 mm or greater, or 10 mm or greater. The radial length of bent portion 21bC may be 15 mm or less or 10 mm or less.

The length of each bent portion 21bC in the winding direction is, for example, 1 mm or greater and 40 mm or less. Since the length of bent portion 21bC in the winding direction is 1 mm or greater, the decrease in degree of freedom of the conductive path in negative current-collector foil 21 can be further inhibited. Along with this, since the length of bent portion 21bC in the winding direction is 40 mm or less, a curvature of bent portion 21bC can be inhibited. Specifically, negative uncoated portion 21b can have a further reduced dimension in axial direction Z. Note that the length of bent portion 21bC in the winding direction may be 0.1 mm or greater, 0.5 mm or greater, 5 mm or greater, 10 mm or greater, or 20 mm or greater. The length of bent portion 21bC in the winding direction may be 20 mm or less, 15 mm or less, 10 mm or less, or 5 mm or less. Note that, preferably, the length of bent portion 21bC in the winding direction is 40 mm or less from the standpoint of easy bending of the entire extended portion 21bB (facilitating the formation of bent portion 21bC).

Folded portion 21bD is formed by folding a region of negative uncoated portion 21b between adjacent bent portions 21bC. Folded portion 21bD is a portion of negative uncoated portion 21b between first fold 21bx and second fold 21by. Folded portion 21bD is folded so that the first fold 21bx is a mountain fold as viewed from the other side Z2 of axial direction Z. Folded portion 21bD is folded so that the second fold 21by is a mountain fold as viewed from one side Z1 of axial direction Z.

Moreover, third fold 21bz is on bent portion 21bC (see Fig. 3). Third fold 21bz is substantially aligned with second fold 11by in axial direction Z.

As noted above, in power storage cell 100 according to the embodiment of the present disclosure, positive plate 10 includes positive current-collector foil 11 and positive electrode mixture layer 12 partially coating positive current-collector foil 11. Positive current-collector foil 11 has positive coated portion 11a and positive uncoated portion 11b. Positive coated portion 11a is coated with positive electrode mixture layer 12. Positive uncoated portion 11b is not coated with positive electrode mixture layer 12, and is exposed to one side Z1 of axial direction Z of wound electrode assembly 1, and extends in winding direction X of wound electrode assembly 1. Positive uncoated portion 11b has: bent portions 11bC bent toward radial direction R of wound electrode assembly 1; and folded portions 11bD formed by folding regions of positive uncoated portion 11b between adjacent bent portions 11bC.

According to the above configuration, positive uncoated portion 11b is bent toward radial direction R. Thus, positive uncoated portion 11b can have a reduced dimension in axial direction Z of wound electrode assembly 1. Along with this, the region of positive uncoated portion 11b between bent portions 11bC is folded, thereby assuring electrical connection between bent portions 11bC by folded portion 11bD. Thus, the decrease in degree of freedom of the conductive path in positive current-collector foil 11 can be inhibited.

Moreover, in power storage cell 100 according to the embodiment of the present disclosure, positive current-collector foil 11 is longer in first direction D1 than in second direction D2 intersecting first direction D1. Positive current-collector foil 11 has positive coated portion 11a and positive uncoated portion 11b. Positive coated portion 11a is coated with positive electrode mixture layer 12. Positive uncoated portion 11b is not coated with positive electrode mixture layer 12 and extends in second direction D2 from positive coated portion 11a. Positive uncoated portion 11b has first fold 11bx and second fold 11by. First fold 11bx and second fold 11by are formed so that the distance between the two increases as they are further away from positive coated portion 11a in second direction D2.

According to the above configuration, positive uncoated portion 11b can be easily bent in radial direction R by bending first fold 11bx and second fold 11by of positive uncoated portion 11b while winding positive current-collector foil 11. As positive uncoated portion 11b is bent toward radial direction R, positive uncoated portion 11b can have a reduced dimension in second direction D2. Moreover, a region of positive uncoated portion 11b between first fold 11bx and second fold 11by can be folded by bending first fold 11bx and second fold 11by. This maintains positive uncoated portion 11b as being continuous in first direction D1. Thus, the decrease in degree of freedom of the conductive path in positive current-collector foil 11 can be inhibited.

Moreover, in power storage cell 100 according to the embodiment of the present disclosure, negative plate 20 includes negative current-collector foil 21 and negative electrode mixture layer 22 partially coating negative current-collector foil 21. Negative current-collector foil 21 has negative coated portion 21a and negative uncoated portion 21b. Negative coated portion 21a is coated with negative electrode mixture layer 22. Negative uncoated portion 21b is not coated with negative electrode mixture layer 22, and is exposed to the other side Z2 of axial direction Z of wound electrode assembly 1 and extends in winding direction X of wound electrode assembly 1. Negative uncoated portion 21b has multiple bent portions 21bC bent toward radial direction R of wound electrode assembly 1, and folded portion 21bD formed by folding a region of negative uncoated portion 21b between adjacent bent portions 21bC.

According to the above configuration, negative uncoated portion 21b is bent toward radial direction R. Thus, negative uncoated portion 21b can have a reduced dimension in axial direction Z of wound electrode assembly 1. Along with this, the region of negative uncoated portion 21b between bent portions 21bC is folded, thereby assuring electrical connection between bent portion 21bC by folded portion 21bD. Thus, the decrease in degree of freedom of the conductive path in negative current-collector foil 21 can be inhibited.

Moreover, in power storage cell 100 according to the embodiment of the present disclosure, negative current-collector foil 21 is longer in first direction D1 than in second direction D2 intersecting first direction D1. Negative current-collector foil 21 has negative coated portion 21a and negative uncoated portion 21b. Negative coated portion 21a is coated with negative electrode mixture layer 22. Negative uncoated portion 21b is not coated with negative electrode mixture layer 22 and extends in second direction D2 from negative coated portion 21a. Negative uncoated portion 21b has first fold 21bx and second fold 21by. First fold 21bx and second fold 21by are formed so that the distance between the two increases as they are further away from negative coated portion 21a in second direction D2.

According to the above configuration, negative uncoated portion 21b can be easily bent in radial direction R by bending first fold 21bx and second fold 21by of negative uncoated portion 21b while winding negative current-collector foil 21. As negative uncoated portion 21b is bent toward radial direction R, negative uncoated portion 21b can have a reduced dimension in second direction D2. Moreover, a region of negative uncoated portion 21b between first fold 21bx and second fold 21by can be folded by bending first fold 21bx and second fold 21by. This maintains negative uncoated portion 21b as being continuous in first direction D1. Thus, the decrease in degree of freedom of the conductive path in negative current-collector foil 21 can be inhibited.

Note that in the power storage cell according to the embodiment of the present disclosure, the uncoated portion (positive uncoated portion 11b, negative uncoated portion 21b) may have multiple extended portions apart from one another. While the positive uncoated portion having multiple extended portions will be described below as an example, the negative uncoated portion may have multiple extended portions as with the positive uncoated portion according to a variation below.

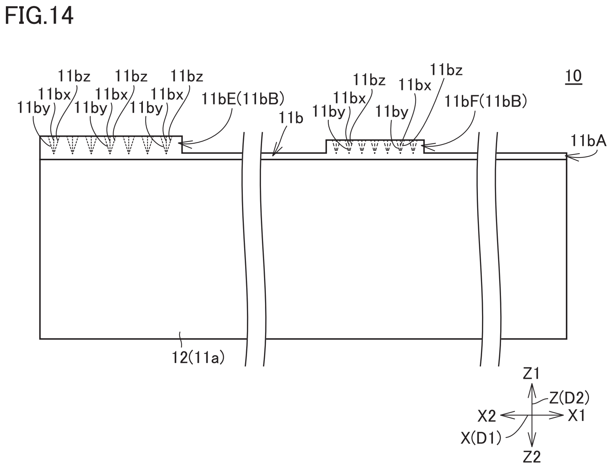

Fig. 14 is a schematic plan view of a positive plate, unwound in a planar shape, of a power storage cell according to a variation of the embodiment of the present disclosure. In Fig. 14, winding direction X corresponds to the planar direction of the drawing.

As shown in Fig. 14, according to the variation of the embodiment of the present disclosure, positive uncoated portion 11b has multiple extended portions 11bB. Extended portions 11bB include a first extended portion 11bE and a second extended portion 11bF.

In the variation, first extended portion 11bE and second extended portion 11bF are aligned separated from each other in first direction D1 (winding direction X). First extended portion 11bE and second extended portion 11bF may be apart from each other or adjacent to each other.

First extended portion 11bE extends from an end of base 11bA on terminating side X2 of first direction D1 (winding direction X). Second extended portion 11bF extends from a portion of base 11bA closer to starting end side X1 than first extended portion 11bE is. In the variation, the length of first extended portion 11bE in second direction D2 is longer than the length of second extended portion 11bF in second direction D2. However, the length of first extended portion 11bE in second direction D2 may be shorter than or the same as the length of second extended portion 11bF in second direction D2.

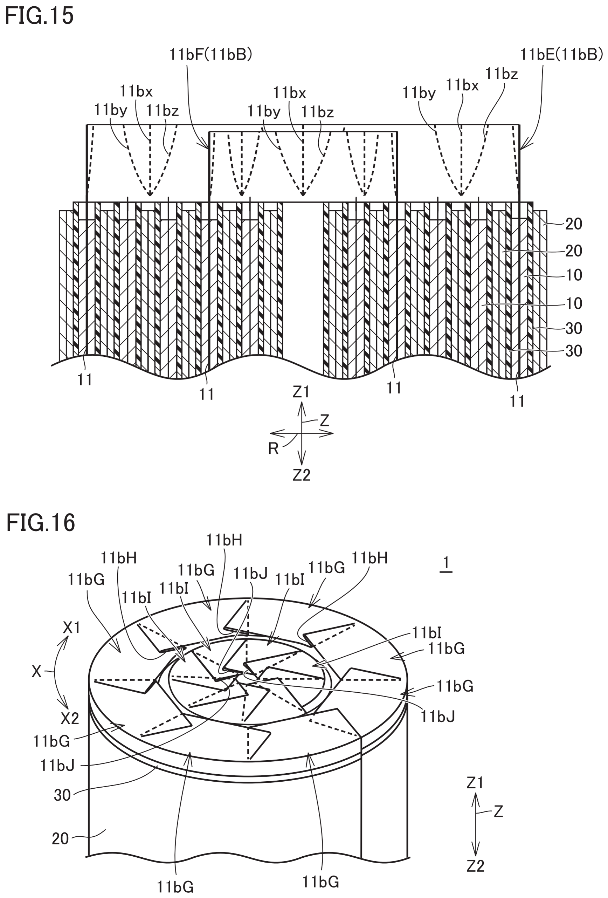

Fig. 15 is a schematic cross-sectional view of a positive plate, a negative plate, and a separator immediately after being wound together to fabricate a wound electrode assembly according to the variation of the embodiment of the present disclosure. As shown in Fig. 15, second extended portion 11bF, immediately after the winding to fabricate the wound electrode assembly according to the variation, is located in the middle in radial direction R as viewed from first extended portion 11bE.

Fig. 16 is a schematic perspective view of the wound electrode assembly according to the variation of the embodiment of the present disclosure. As shown in Figs. 15 and 16, first extended portion 11bE is bent in the radial direction and multiple first bent portions 11bG are, thereby, formed. Then, regions of first extended portion 11bE between first bent portions 11bG are folded and first folded portions 11bH are, thereby, formed.

Furthermore, second extended portion 11bF, in the middle in radial direction R as viewed from first bent portion 11bG and first folded portion 11bH, is bent in the radial direction and multiple second bent portions 11bI are, thereby, formed. Then, regions of second extended portion 11bF between second bent portions 11bI are folded and second folded portions 11bJ are, thereby, formed. Second bent portion 11bI and second folded portion 11bJ may or may not overlap with first bent portion 11bG and first folded portion 11bH.

The presently disclosed embodiments should be considered in all aspects as illustrative and not restrictive. The scope of the present disclosure is defined by the appended claims, rather than by the description of the embodiments above. All changes which come within the meaning and range of equivalency of the appended claims are to be embraced within their scope.

### REFERENCE SIGNS LIST

1 wound electrode assembly; 2 case; 2a upper surface; 2b lower surface; 2c circumferential surface; 2d through-hole; 3 positive terminal; 3a disk portion; 3b riveting portion; 3c end; 4 positive current collector plate; 5 external gasket; 6 internal gasket; 7 negative current collector plate; 10 positive plate (first electrode); 11 positive current-collector foil (current-collector foil); 11a positive coated portion (coated portion); 11b positive uncoated portion (uncoated portion); 11bA base; 11bB extended portion; 11bC bent portion; 11bD folded portion; 11bE first extended portion; 11bF second extended portion; 11bG first bent portion; 11bH first folded portion; 11bI second bent portion; 11bJ second folded portion; 11bx first fold; 11by second fold; 11bz third fold; 12 positive electrode mixture layer (electrode material); 20 negative plate (second electrode); 21 negative current-collector foil; 21a negative coated portion; 21b negative uncoated portion; 21bA base; 21bB extended portion; 21bC bent portion; 21bD folded portion; 21bx first fold; 21by second fold; 21bz third fold; 22 negative electrode mixture layer; 30 separator; 100 power storage cell; and 200 blade.

## Claims

1. A power storage cell, comprising:
a wound electrode assembly including a first electrode and a second electrode; and
a case accommodating the wound electrode assembly, wherein
the first electrode includes:
a current-collector foil; and
an electrode material partially coating the current-collector foil, wherein
the current-collector foil has:
a coated portion coated with the electrode material; and
an uncoated portion not coated with the electrode material, the uncoated portion being exposed to one side in an axial direction of the wound electrode assembly and extending in a winding direction of the wound electrode assembly, wherein
the uncoated portion has a plurality of bent portions bent toward a radial direction of the wound electrode assembly, and a folded portion formed by folding a region of the uncoated portion between adjacent bent portions among the plurality of bent portions.

2. The power storage cell according to claim 1, wherein
a length of each of the plurality of bent portions in the radial direction is 1 mm or greater and 23 mm or less.

3. The power storage cell according to claim 1 or 2, wherein
a length of each of the plurality of bent portions in the winding direction is 1 mm or greater and 40 mm or less.

4. A power storage cell, comprising:
a current-collector foil; and
an electrode material partially coating the current-collector foil, wherein
the current-collector foil is longer in a first direction than in a second direction intersecting the first direction,
the current-collector foil has:
a coated portion coated with the electrode material; and
an uncoated portion not coated with the electrode material and extending in the second direction from the coated portion, wherein
the uncoated portion has a first fold and a second fold, and
the first fold and the second fold are formed so that a distance between the first fold and the second fold increases as the first fold and the second fold are further away from the coated portion in the second direction.

5. The power storage cell according to claim 4, wherein
an end of the first fold closer to the coated portion and an end of the second fold closer to the coated portion coincide with each other.

6. The power storage cell according to claim 4 or 5, wherein
the uncoated portion further has a third fold, and
the third fold is formed on a side opposite the second fold, as viewed from the first fold.

7. A power storage cell, comprising:
a current-collector foil; and
an electrode material partially coating the current-collector foil, wherein
the current-collector foil is longer in a first direction than in a second direction intersecting the first direction,
the current-collector foil has:
a coated portion coated with the electrode material; and
an uncoated portion not coated with the electrode material and extending in the second direction from the coated portion, wherein
the uncoated portion includes:
a base that continues with the coated portion in the second direction; and
an extended portion extending opposite the coated portion as viewed from the base, wherein
a length of the extended portion in the first direction is 73 mm or greater, and shorter than a length of the base in the first direction.

8. The power storage cell according to claim 7, wherein
the extended portion has a length of 220 mm or less in the first direction.

9. The power storage cell according to claim 7 or 8, wherein
the extended portion has a length of 1 mm or greater and 23 mm or less in the second direction.
